# EUROPÄISCHE PATENTSCHRIFT

(11) **EP 0 376 427 B1**
(45) Veröffentlichungstag und Bekanntmachung des Hinweises auf die Patenterteilung: **03.03.1993**
(21) Anmeldenummer: 89250134.7
(22) Anmeldetag: 29.12.1989
(51) Int. Cl.: B60C 27/14, B60C 27/00

(54) **Gleitschutzvorrichtung**
Anti-skidding device
Système antidérapant

(30) Priorität: 30.12.1988 DE 3844494
(43) Veröffentlichungstag der Anmeldung: 04.07.1990
(73) Patentinhaber: RUD-KETTENFABRIK RIEGER & DIETZ GMBH U. CO., 73432 Aalen (DE)
(72) Erfinder: Zeiser, Peter, Dipl.-Ing., D-7080 Aalen-Wasseralfingen (DE)
(74) Vertreter: Böning, Manfred, Dr.-Ing.

(56) Entgegenhaltungen:
- EP-A- 0 189 505
- EP-A- 0 313 520
- WO-A-84/04071
- DE-A- 3 545 529
- US-A- 2 601 882

## Beschreibung

Die Erfindung betrifft eine Gleitschutzvorrichtung für Fahrzeugräder mit einer am Rad befestigbaren, gegenüber diesem drehbaren Halterung für mindestens ein im montierten Zustand der Gleitschutzvorrichtung an der Radaußenseite angeordnetes Halteelement zum Halten von über den Radumfang verteilten Gleitschutzmitteln, bei der die Halterung unter Federkrafteinwirkung gegen das Rad gezogen wird.

Aus der DE-OS 35 45 529 ist eine Gleitschutzvorrichtung der vorstehenden Art bekannt, deren Halterung mit mehreren Gummispannsträngen ausgestattet ist, die an ihren Enden Haken aufweisen, welche in Aussparungen der Felgen von Fahrzeugrädern einhängbar sind. Bei der Montage derartiger Gleitschutzvorrichtungen wird ein Teil ihres geschlossenen Laufnetzes von der Außenseite des Fahrzeugrades korb- oder käfigartig über dessen außerhalb der Bodenaufstandsfläche liegenden Laufflächenteil gestülpt und der außerhalb des Laufflächenbereiches verbliebene Rest des Laufnetzes beim Anfahren durch die Gummispannstränge automatisch ebenfalls auf die Lauffläche überführt. Die Montagevorteile sind eklatant. Wenn die bekannte Lösung gleichwohl nicht voll zu befriedigen vermag, so deshalb, weil sie der Formvielfalt von Fahrzeugfelgen nicht gerecht wird, dies ganz abgesehen davon, daß bei einigen Felgentypen ein Einhängen von Haken gänzlich unmöglich ist. Hinzu kommt, daß bei bestimmten Felgen und Fahrzeugtypen der Zwischenraum zwischen der Felgeninnenseite und Teilen des Bremssystems so klein ist, daß er das Einhängen von Haken ebenfalls unmöglich macht. Als problematisch erweist sich darüber hinaus der Umstand, daß insbesondere moderne Aluminiumfelgen eine vergleichsweise große Wanddicke haben, die eine Hakenbefestigung zumindest erschwert. Schließlich beeinträchtigt die Notwendigkeit zur Handhabung mehrerer Spannstränge den Bedienungskomfort bei der Montage und Demontage, zumal aufgrund der radialen Anordnung der Spannstränge in ergonomisch ungünstiger Weise vergleichsweise große Spannkräfte aufgebracht werden müssen, und dies sowohl beim Ein- als auch beim Aushängen eines jeden Hakens.

Bekannt ist außerdem aus der WO-A-8404071 eine Gleitschutzvorrichtung für Fahrzeugräder, bei der mit Hilfe speziell ausgebildeter Radmuttern eine kreisförmige Scheibe mit der Felge des Fahrzeugrades verbunden ist. Im Zentrum der Scheibe befindet sich bei dieser Vorrichtung ein mit der Radachse fluchtender Lagerzapfen für ein Kugellager zur drehbaren Lagerung einer Halterung für speichenartig angeordnete Halteelemente. Die Halterung kann bei dieser Konstruktion gegenüber der Achse des Fahrzeugrades lediglich eine Drehbewegung ausführen, d.h. die Halteelemente, die beim Aufziehen der Vorrichtung auf ein nicht aufgebocktes Rad den zunächst außerhalb der Reifenaufstandsfläche gelegenen Vorrichtungsteilen zugeordnet sind, müssen während der Montage unter entsprechendem Kraftaufwand erheblich verformt werden.

Der Erfindung liegt die Aufgabe zugrunde, eine Gleitschutzvorrichtung der in Betracht gezogenen Art zu schaffen, die sich unmittelbar an ein einzelnes vom Felgendesign des Fahrzeugrades unabhängiges Bauteil anschließen läßt. Diese Aufgabe wird erfindungsgemäß dadurch gelöst, daß zur Befestigung der Halterung am Fahrzeugrad ein nach Art eines einarmigen Hebels ausgebildetes Anschlußteil dient, daß das Anschlußteil sich vom Zentrum der Halterung radial nach außen erstreckt, daß das Anschlußteil mittels eines Befestigungselementes mit nur einer Radschraube oder Radmutter verbindbar ist und daß zum Aufbringen der Federkraft eine gesonderte Spannfeder dient.

Die erfindungsgemäße Gleitschutzvorrichtung bietet den Vorteil, daß sich bei ihrem Einsatz mehrere Befestigungsvorgänge erübrigen und daß bei nicht montierter Gleitschutzvorrichtung die Radabdeckungen den für sie vorgeschriebenen Platz einnehmen können. Da der Abstand der Radschrauben bzw. Radmuttern von der jeweiligen Fahrzeugradachse in der Praxis nur in weit engeren Grenzen schwankt als der Abstand der Felgenlöcher unterschiedlicher Felgen von den Radachsen, ist die erfindungsgemäße Gleitschutzvorrichtung universell einsetzbar, wobei nicht unerwähnt bleiben mag, daß der 1-Punkt-Anschluß eine Berücksichtigung des von der Schraubenzahl abhängigen Lochbildes der Radschrauben überflüssig macht. Im Hinblick darauf, daß das Anschlußteil selbst nicht als Spannfeder ausgebildet ist, erweist sich die Verbindung des Befestigungselementes mit der Radschraube bzw. Radmutter als außerordentlich einfach.

Die Erfindung wird im folgenden anhand der beigefügten, mehrere bevorzugte Ausführungsbeispiele darstellenden Zeichnung näher erläutert. Es zeigen:
Fig. 1 die perspektivische Ansicht einer auf ein Fahrzeugrad montierten Gleitschutzvorrichtung,
Fig. 2 in vergrößertem Maßstab Einzelheiten der zur Befestigung der Gleitschutzvorrichtung nach Fig. 1 dienenden Teile in einer ersten Position während der Montage der Gleitschutzvorrichtung,
Fig. 3 die in der Fig. 2 dargestellten Teile nach Abschluß des Montagevorganges,
Fig. 4 eine kombinierte Klemm- und Steckverbindung zur Befestigung einer Gleitschutzvorrichtung gemäß Fig. 1,
Fig. 5 eine Schraubverbindung zur Befestigung einer Gleitschutzvorrichtung nach Fig. 1,
Fig. 6 eine Bajonettverschlußverbindung zur Befestigung einer Gleitschutzvorrichtung nach Fig. 1,
Fig. 7 eine Einzelheit der Fig. 6 und
Fig. 8 einen Schnitt längs der Linie VIII-VIII in Fig. 7.

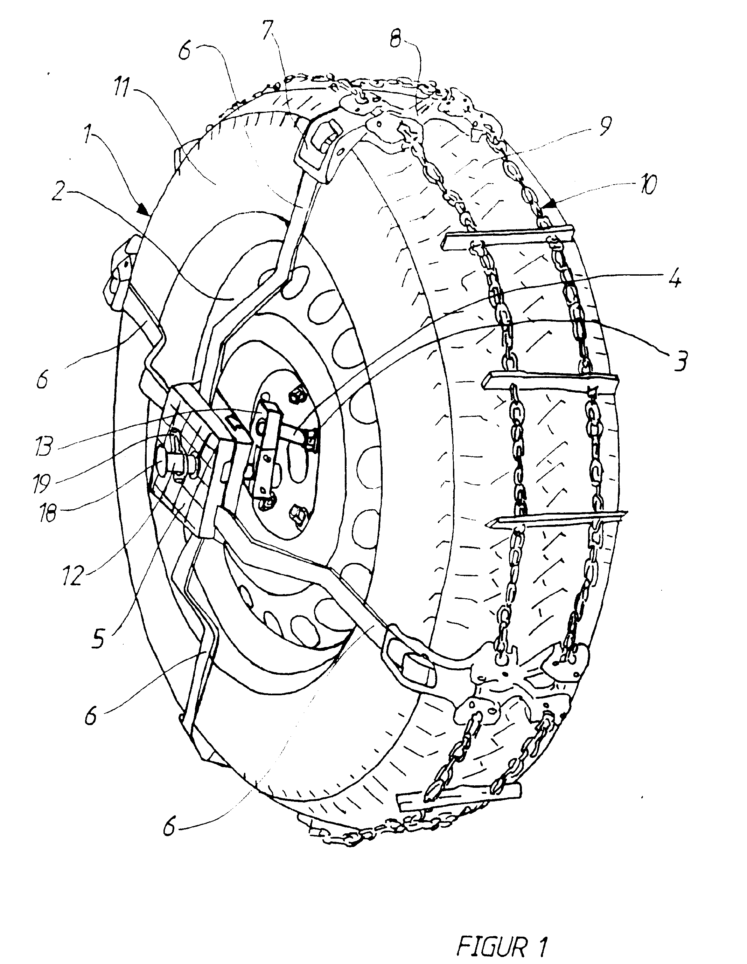

In Figur 1 ist 1 ein Fahrzeugrad mit einer Felge, die mittels Radschrauben 3 mit einer in Figur 1 nicht dargestellten Radnabe verbunden ist. Eine der Radschrauben 3 ist als Spezialschraube ausgebildet und wird zur Verankerung eines Befestigungselementes 4 einer auf das Fahrzeugrad 1 aufgezogenen Gleitschutzvorrichtung genutzt. Die Gleitschutzvorrichtung besitzt eine zentrale Halterung 5 für vier in der Halterung 5 um begrenzte Beträge hin- und herverschiebbare Halteelemente 6, deren der Halterung 5 abgewandte Enden gelenkig mit Auslegern 7 von Gleitschutzelementen 8 verbunden sind, die Teile eines die Lauffläche 9 des Fahrzeugrades bedeckenden, einen in sich geschlossenen Ring formenden Laufnetzes 10 bilden. Das Laufnetz 10 wird durch die Halteelemente auf der Lauffläche 9 gehalten, ohne daß es einer inneren Seitenkette oder vergleichbarer Mittel bedarf. Um das Aufziehen des Laufnetzes 10 auf die Lauffläche 9 des Fahrzeugrades und dessen Verbleib auf der Lauffläche 9 auch in kritischen Situationen, wie bei einer scharfen Kurvenfahrt, zu gewährleisten, müssen die Halteelemente federnd gegen die Flanke 11 des Reifens des Fahrzeugrades 1 gedrückt werden. Hierzu dient eine einzige zentrale Spannfeder 12, die drehbar in der Halterung 5 und/oder einem Anschlußteil 13 gelagert ist. Halterung 5, Spannfeder 12 und Anschlußteil 13 sind unverlierbar miteinander verbunden und bilden mit den Halteelementen 6 und dem Laufnetz 10 ein einheitliches Gebilde.

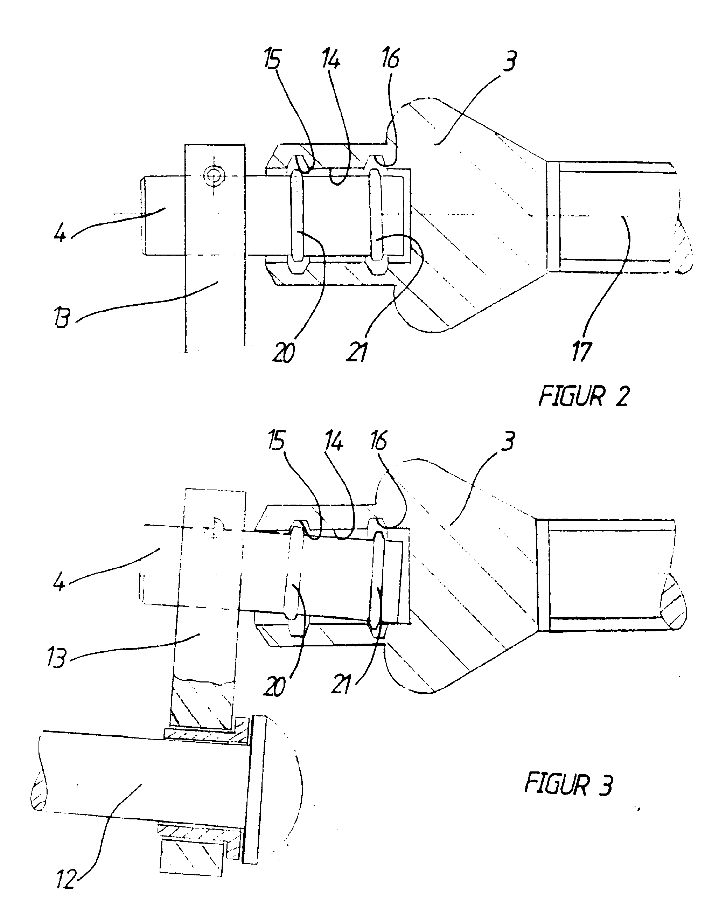

Einzelheiten der Verbindung zwischen dem Befestigungselement 4 und der ihm zugeordneten Radschraube 3 sind in den Figuren 2 und 3 dargestellt. Wie man sieht, ist die Radschraube 3 mit einer Ausnehmung 14 versehen, die zwei rillenförmige Rastmulden 15 und 16 aufweist und das Befestigungselement 4 mit Spiel umschließt. Bei ungespannter Spannfeder läßt sich das Befestigungselement 4 problemlos in Richtung seiner Längsachse 17 in die Ausnehmung 15 stecken. Sobald die Spannfeder 12 durch Ziehen an einem Betätigungsorgan 18 gespannt und durch ein Arretierungselement 19 in der Spannstellung arretiert ist, stellen sich das Anschlußteil 13 und das Befestigungselement 4 leicht schräg, und am Befestigungselement 4 angeordnete, als Ringstege ausgebildete Vorsprünge 20 und 21 rasten an sich diagonal gegenüberliegenden Stellen der Rastmulden 15,16 ein. Die Spannfeder, die im dargestellten Fall aus gummielastischem Material besteht, gleicht die Schräglage des Anschlußteiles 13 gegenüber der Halterung 5 problemlos aus. Die Kombination eines einzigen Befestigungselementes 4 mit einem einzelnen zentralen Betätigungsorgan 18 für nur eine Spannfeder 12 bringt eine erhebliche Verbesserung des Bedienungskomforts mit sich und erweist sich als besonders glücklich.

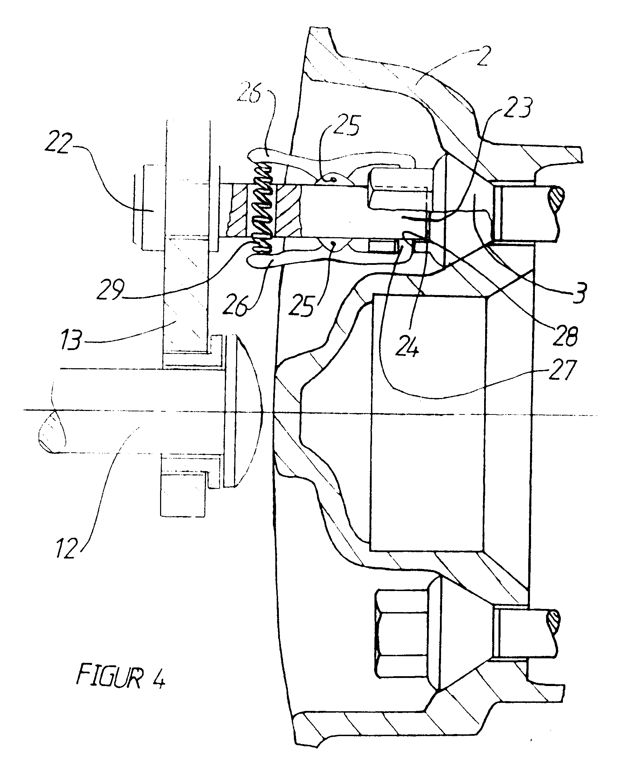

In Figur 4 ist eine andere Befestigungsmöglichkeit für die in Fig. 1 dargestellte Gleitschutzvorrichtung aufgezeigt. An das Ende der Spannfeder 12 schließt sich auch hier ein Anschlußteil 13 an, in dem drehbar ein Befestigungselement 22 gelagert ist. Das dem Anschlußteil 13 abgewandte Ende 23 des Befestigungselementes 22 greift in diesem Fall annähernd spielfrei in eine Ausnehmung 24 der Radschraube 3 ein, wobei das Ende 23 und die Ausnehmung 24 sowohl rund als auch profiliert sein können. Bei Wahl einer profilierten Ausnehmung kann die Radschraube 3 nicht nur zu Befestigungszwecken genutzt werden, sondern auch zum Schutz gegen Diebstähle des Fahrzeugrades dienen. Zur Sicherung des Sitzes des Endes 23 in der Ausnehmung 24 dienen zwei auf Bolzen 25 gelagerte, schwenkbare Klemmhebel 26, die mit Nasen 27 in Bohrungen 28 der Radschraube 3 greifen und durch eine Feder 29 in ihrer Sicherungsposition gehalten werden. Beim Verbinden des Befestigungselementes 22 mit der Radschraube 3 braucht der Benutzer lediglich die unter Einwirkung der Feder 29 stehenden Enden der Klemmhebel 26 zusammenzudrücken.

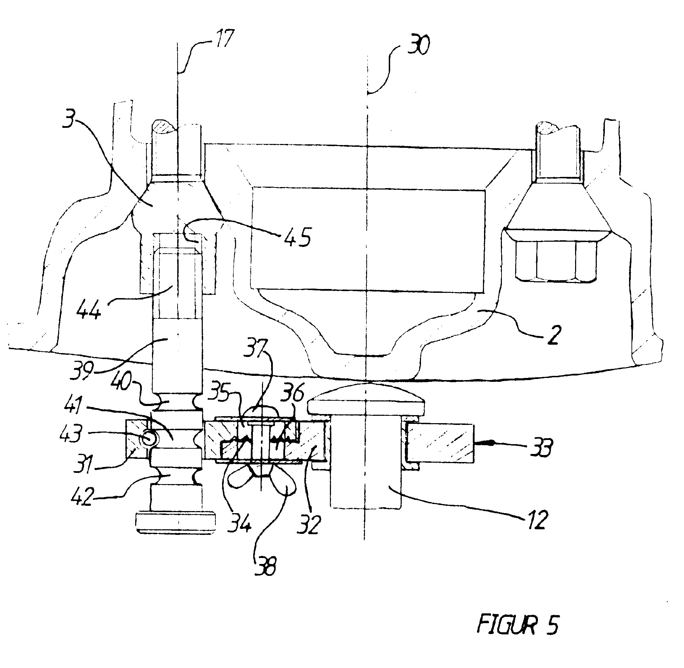

Um einer in Sonderfällen denkbaren Notwendigkeit zur Anpassung des Befestigungsmechanismus für eine Gleitschutzvorrichtung an unterschiedliche Abstände zwischen der Achse 30 des Fahrzeugrades und der Längsachse 17 der Radschraube 3 Rechnung tragen zu können, wird bei dem Ausführungsbeispiel gemäß Figur 5 ein aus zwei Teilstücken 31 und 32 bestehendes Anschlußteil 33 verwendet. Die beiden Teilstücke 31 und 32 sind im Bereich ihrer Verbindungsstelle mit einer Rastverzahnung 34 versehen, die eine Arretierung der Stücke 31 und 32 in unterschiedlichen Positionen zueinander gestattet, wobei zur Sicherung in der jeweiligen Position eine in Langlöchern 35, 36 angeordnete Schraube 37 und eine Flügelmutter 38 dienen.

Neben der Möglichkeit einer Anpassung des Anschlußteiles 33 an unterschiedliche Lochkreisdurchmesser für die Radschrauben 3 ist es bei dem Befestigungsmechanismus gemäß Figur 5 auch möglich, das Befestigungselement 39 an innerhalb der Felge 2 mehr oder weniger tief gelegene Radschrauben anzupassen. Das Befestigungselement 39 ist zu diesem Zweck mit drei Nuten 40,41 und 42 ausgestattet, in die ein Verriegelungsstift 43 eingreifen kann. Ausreichendes Spiel zwischen dem Verriegelungsstift 43 und den Nuten 40,41 und 42 ermöglicht ein problemloses Einschrauben eines Gewindeabschnittes 44 des Befestigungselementes 39 in eine Gewindebohrung 45 der Radschraube 3.

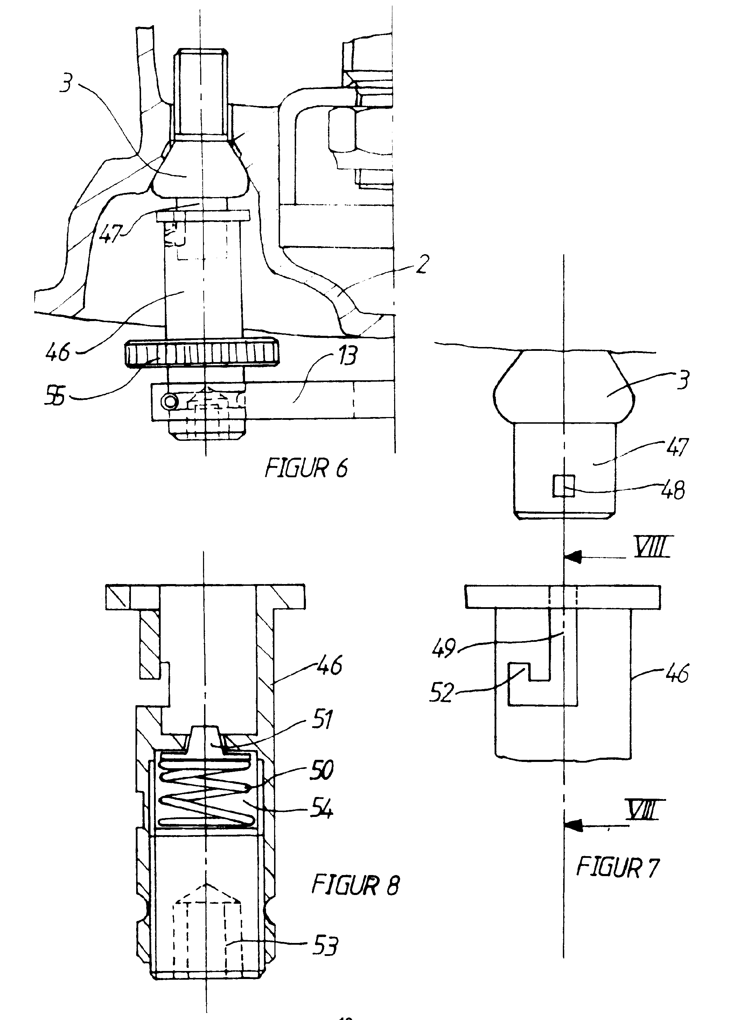

Die Figuren 6 bis 8 schließlich zeigen ein Befestigungsmechanismus, bei dem eine Radschraube 3 nach Art eines Bajonettverschlusses mit einem Befestigungselement 46 verbunden werden kann. Die in diesem Fall mit einem Innensechskant versehene Radschraube 3 weist am Umfang eines Ansatzes 47 einen Vorsprung 48 auf, der in einen Führungskanal 49 des hülsenförmig ausgebildeten Befestigungselementes 47 einführbar ist. Ein unter der Einwirkung einer Feder 50 stehendes Drucklager 51 drückt den Vorsprung 48 bei über den Ansatz 47 gestülptem und um einen geringen Winkelbetrag geschwenkten Befestigungselement 46 in eine Rastkerbe 52. Die Feder 50 wird durch eine Verschlußschraube 53 in einer für sie vorgesehenen Kammer 54 des Befestigungselementes 56 gehalten. Zur Erleichterung der Handhabung des Befestigungselementes 56 ist dies mit einem Rändelrad 55 versehen.

## Patentansprüche

1. Gleitschutzvorrichtung für Fahrzeugräder mit einer am Rad befestigbaren, gegenüber diesem drehbaren Halterung (5) für mindestens ein im montierten Zustand der Gleitschutzvorrichtung an der Radaußenseite angeordnetes Halteelement (6) zum Halten von über den Radumfang verteilten Gleitschutzmitteln, bei der die Halterung (5) unter Federkrafteinwirkung gegen das Rad gezogen wird, dadurch **gekennzeichnet**, daß zur Befestigung der Halterung (5) am Fahrzeugrad ein nach Art eines einarmigen Hebels ausgebildetes Anschlußteil (13,33) dient, daß das Anschlußteil (13,33) sich vom Zentrum der Halterung (5) radial nach außen erstreckt, daß das Anschlußteil (13,33) mittels eines Befestigungselementes (4,22,39,46) mit nur einer Radschraube (3) oder Radmutter verbindbar ist und daß zum Aufbringen der Federkraft eine gesonderte Spannfeder (12) dient.

2. Gleitschutzvorrichtung nach Anspruch 1, dadurch gekennzeichnet, daß das Befestigungselement (4,22,39,46) und das Anschlußteil (13,33) eine im wesentlichen L-förmige Einheit bilden.

3. Gleitschutzvorrichtung nach Anspruch 2, dadurch gekennzeichnet, daß das Anschlußteil (13,33) als Brücke zur Überbrückung des Abstandes vom Zentrum der zentralen Halterung (5) zur Längsachse der Radschraube (3) oder Radmutter ausgebildet ist.

4. Gleitschutzvorrichtung nach einem der Ansprüche 1 bis 3, dadurch gekennzeichnet, daß das Befestigungselement (4,22,39,46) drehbar im Anschlußteil (13,33) gelagert ist.

5. Gleitschutzvorrichtung nach einem der Ansprüche 1 bis 4, dadurch gekennzeichnet, daß das Anschlußteil (13,33) drehbar gegenüber der Halterung (5) gelagert ist.

6. Gleitschutzvorrichtung nach einem der Ansprüche 1 bis 4, dadurch gekennzeichnet, daß das Anschlußteil (13,33) über eine Spannfeder (12) mit der Halterung (5) verbunden ist.

7. Gleitschutzvorrichtung nach Anspruch 6, dadurch gekennzeichnet, daß die Spannfeder (12) durch ein im Zentrum der Halterung (5) angeordnetes Betätigungsorgan (18) betätigbar ist.

8. Gleitschutzvorrichtung nach einem der Ansprüche 1 bis 7, dadurch gekennzeichnet, daß die Verbindung zwischen dem Befestigungselement (4) und der Radschraube (3) bzw. Radmutter als Steckverbindung ausgebildet ist.

9. Gleitschutzvorrichtung nach einem der Ansprüche 1 bis 7, dadurch gekennzeichnet, daß die Verbindung zwischen dem Befestigungselement (39) und der Radschraube (3) bzw. Radmutter als Schraubverbindung ausgebildet ist.

10. Gleitschutzvorrichtung nach einem der Ansprüche 1 bis 7, dadurch gekennzeichnet, daß die Verbindung zwischen dem Befestigungselement (22) und der Radschraube (3) bzw. Radmutter als Klemmverbindung ausgebildet ist.

11. Gleitschutzvorrichtung nach einem der Ansprüche 1 bis 7, dadurch gekennzeichnet, daß die Verbindung zwischen dem Befestigungselement (46) und der Radschraube (3) bzw. Radmutter nach Art eines Bajonettverschlusses ausgebildet ist.

12. Gleitschutzvorrichtung nach Anspruch 8, dadurch gekennzeichnet, daß die Radschraube (3) mit einer Ausnehmung (14) versehen ist, die das Befestigungselement (4) mit einem Spiel umschließt, das so bemessen ist, daß das Befestigungselement (4) durch eine durch die Spannfeder (12) verursachte Kippbewegung in der Ausnehmung (14) gehalten wird.

13. Gleitschutzvorrichtung nach Anspruch 12, dadurch gekennzeichnet, daß das Befestigungselement (4) mit mindestens einem in mindestens eine Rastmulde (15,16) der Ausnehmung (14) greifenden Vorsprung (20,21) versehen ist.

14. Gleitschutzvorrichtung nach Anspruch 13, dadurch gekennzeichnet, daß die Rastmulde (15,16) und der Vorsprung (20,21) ringförmig ausgebildet sind.

15. Gleitschutzvorrichtung nach einem der Ansprüche 1 bis 14, dadurch gekennzeichnet, daß das Befestigungselement (39) in Richtung seiner Längsachse gegenüber dem Anschlußteil (33) verstellbar ist.

16. Gleitschutzvorrichtung nach einem der Ansprüche 1 bis 15, dadurch gekennzeichnet, daß das Anschlußteil (39) aus zwei Teilstücken (31,32) besteht, die eine Veränderung des Abstandes zwischen der Längsachse (17) des Befestigungselementes (39) und dem Zentrum der Halterung (5) zulassen.

17. Gleitschutzvorrichtung nach einem der Ansprüche 1 bis 16, dadurch gekennzeichnet, daß sie mit einer Spannkraftanzeigevorrichtung versehen ist.

## Claims

1. Anti-skidding device for vehicle wheels, having a holding device (5) which can be fixed on the wheel and can be rotated relative to the latter, for at least one holding element (6), arranged on the outside of the wheel in the mounted condition of the anti-skidding device, for holding anti-skidding means distributed over the wheel circumference, in which the holding device (5) is pulled against the wheel under the action of spring force, characterised in that a connection part (13,33) designed in the manner of a one-armed lever is used to fix the holding device (5) on the vehicle wheel, in that the connection part (13,33) extends radially outwards from the centre of the holding device (5), in that the connection part (13,33) can be connected by means of a fixing element (4,22,39,46) to just one wheel bolt (3) or wheel nut, and in that a separate tension spring (12) is used to apply the spring force.

2. Anti-skidding device according to Claim 1, characterised in that the fixing element (4,22,39,46) and the connection part (13,33) form an essentially L-shaped unit.

3. Anti-skidding device according to Claim 2, characterised in that the connection part (13,33) is designed as a bridge for bridging the distance from the centre of the central holding device (5) to the longitudinal axis of the wheel bolt (3) or wheel nut.

4. Anti-skidding device according to one of Claims 1 to 3, characterised in that the fixing element (4,22,39,46) is rotatably mounted in the connection part (13,33).

5. Anti-skidding device according to one of Claims 1 to 4, characterised in that the connection part (13,33) is mounted so as to be rotatable relative to the holding device (5).

6. Anti-skidding device according to one of Claims 1 to 4, characterised in that the connection part (13,33) is connected to the holding device (5) via a tension spring (12).

7. Anti-skidding device according to Claim 6, characterised in that the tension spring (12) is actuable by an actuating member (18) arranged in the centre of the holding device (5).

8. Anti-skidding device according to one of Claims 1 to 7, characterised in that the connection between the fixing element (4) and the wheel bolt (3) or wheel nut is designed as a plug-in connection.

9. Anti-skidding device according to one of Claims 1 to 7, characterised in that the connection between the fixing element (39) and the wheel bolt (3) or wheel nut is designed as a screw-in connection.

10. Anti-skidding device according to one of Claims 1 to 7, characterised in that the connection between the fixing element (22) and the wheel bolt (3) or wheel nut is designed as a clamped connection.

11. Anti-skidding device according to one of Claims 1 to 7, characterised in that the connection between the fixing element (46) and the wheel bolt (3) or wheel nut is designed in the manner of a bayonet joint.

12. Anti-skidding device according to Claim 8, characterised in that the wheel bolt (3) is provided with a recess (14) which surrounds the fixing element (4) with a clearance dimensioned such that the fixing element (4) is held in the recess (14) by a tilting movement caused by the tension spring (12).

13. Anti-skidding device according to Claim 12, characterised in that the fixing element (4) is provided with at least one projection (20,21) engaging in at least one catch hollow (15,16) of the recess (14).

14. Anti-skidding device according to Claim 13, characterised in that the catch hollow (15,16) and the projection (20,21) are of annular design.

15. Anti-skidding device according to one of Claims 1 to 14, characterised in that the fixing element (39) is adjustable in the direction of its longitudinal axis relative to the connection part (33).

16. Anti-skidding device according to one of Claims 1 to 15, characterised in that the connection part (39) comprises two component parts (31, 32) which allow an alteration of the distance between the longitudinal axis (17) of the fixing element (39) and the centre of the holding device (5).

17. Anti-skidding device according to one of Claims 1 to 16, characterised in that it is provided with a tension-force indication device.

## Revendications

1. Dispositif antidérapant pour roues de véhicules comprenant une monture (5) pouvant être fixée à la roue et pouvant tourner par rapport à celle-ci, et destinée à porter un élément de montage (6) qui est disposé contre la face extérieure de la roue dans l'état monté du dispositif antidérapant, et destiné à tenir des moyens antidérapants répartis sur la périphérie de la roue, dans lequel la monture (5) est attirée contre la roue sous l'effet d'une force élastique, caractérisé en ce que, pour fixer la monture (5) à la roue du véhicule, on utilise un élément de raccordement (13, 33) présentant la forme d'un levier à un seul bras, en ce que l'élément de raccordement (13, 33) s'étend radialement vers l'extérieur à partir du centre de la monture (5), en ce que l'élément de raccordement (13, 33) peut être relié par un élément de fixation (4, 22, 39, 46) à une seule vis de roue (3) ou un seul écrou de roue, et en ce qu'un ressort de tension spécial (12) sert à exercer la force élastique.

2. Dispositif antidérapant selon la revendication 1, caractérisé en ce que l'élément de fixation (4, 22, 39, 46) et l'élément de raccordement (13, 33) forment une unité sensiblement en forme de L.

3. Dispositif antidérapant selon la revendication 2, caraçtérisé en ce que l'élément de raccordement (13, 33) présente la forme d'un pont pour couvrir la distance entre le centre de la monture centrale (5) et l'axe longitudinal de la vis (3) de roue ou de l'écrou de roue.

4. Dispositif antidérapant selon une des revendications 1 à 3, caractérisé en ce que l'élément de fixation (4, 22, 39, 46) est monté rotatif dans l'élément de raccordement (13, 33).

5. Dispositif antidérapant selon une des revendications 1 à 4, caractérisé en ce que l'élément de raccordement (13, 33) est monté rotatif par rapport à la monture (5).

6. Dispositif antidérapant selon une des revendications 1 à 4, caractérisé en ce que l'élément de raccordement (13, 33) est relié à la monture (5) par l'intermédiaire d'un ressort de tension (12).

7. Dispositif antidérapant selon la revendication 6, caractérisé en ce que le ressort de traction (12) peut être actionné par un organe d'actionnement (18) disposé au centre de la monture (5).

8. Dispositif antidérapant selon une des revendications 1 à 7, caractérisé en ce que la liaison entre l'élément de fixation (4) et la vis (3) de roue ou l'écrou de roue est une liaison à emmanchement.

9. Dispositif antidérapant selon une des revendications 1 à 7, caractérisé en ce que la liaison entre l'élément de fixation (39) et la vis (3) de roue ou l'écrou de roue est constituée par une liaison filetée.

10. Dispositif antidérapant selon une des revendications 1 à 7, caractérisé en ce que l'élément de fixation (22) et la vis (3) de roue ou l'écrou de roue est constituée par une liaison à serrage.

11. Dispositif antidérapant selon une des revendications 1 à 7, caractérisé en ce que la liaison entre l'élément de fixation (46) et la vis (3) de roue ou l'écrou de roue est constituée par un assemblage à baïonette.

12. Dispositif antidérapant selon la revendication 8, caractérisé en ce que la vis (3) de roue est munie d'un évidement (14) qui entoure l'élément de fixation (4) avec un jeu qui est calculé de manière que l'élément de fixation (4) soit maintenu dans l'évidement (14) par un mouvement de basculement provoqué par le ressort de tension (12).

13. Dispositif antidérapant selon la revendication 12, caractérisé en ce que l'élément de fixation (4) est muni d'au moins une saillie (20, 21) qui s'engage dans au moins une encoche de verrouillage (15, 16) de l'évidement (14).

14. Dispositif antidérapant selon la revendication 13, caractérisé en ce que l'encoche d'arrêt (15, 16) et la saillie (20, 21) sont de forme annulaire.

15. Dispositif antidérapant selon une des revendications 1 à 14, caractérisé en ce que l'élément de fixation (39) est réglable dans la direction de son axe longitudinal par rapport à l'élément de raccordement (33).

16. Dispositif antidérapant selon des revendications 1 à 15, caractérisé en ce que l'élément de raccordement (39) est composé de deux pièces partielles (31, 32) qui permettent de faire varier la distance entre l'axe longitudinal (17) de l'élément de fixation (39) et le centre de la monture (5).

17. Dispositif antidérapant selon une des revendications 1 à 16, caractérisé en ce qu'il est muni d'un dispositif d'indication de la force de tension.
